# EUROPÄISCHE PATENTANMELDUNG

(11) **EP 4 501 613 A1**
(43) Veröffentlichungstag der Anmeldung: **05.02.2025**
(21) Anmeldenummer: 24191340.9
(22) Anmeldetag: 29.07.2024
(51) Int. Cl.: B29D 30/00, B29D 30/20

(54) **ANLAGE ZUR HERSTELLUNG VON KOMPONENTEN EINES FAHRZEUGLUFTREIFENS**

(30) Priorität: 01.08.2023 DE 102023207364
(71) Anmelder: Continental Reifen Deutschland GmbH, 30175 Hannover (DE)
(72) Erfinder: Thomfohrde, Claudia, 30175 Hannover (DE); Gieseke, Hendrik, 30175 Hannover (DE); König, Olav, 30175 Hannover (DE); Weiss, Eric, 57200 Sarreguemines (FR)
(74) Vertreter: Continental Corporation

(57) **Zusammenfassung**

Die vorliegende Erfindung betrifft eine Anlage (50) zur Herstellung von Komponenten eines Fahrzeugluftreifens, die eine Arbeitsstation mit einer ersten Frontmaschine (54), eine erste Parkposition (58, 80, 90) sowie eine zweite Parkposition (60, 82, 92) aufweist, wobei die Anlage (50, 86, 94) dergestalt konfigurierbar ist, dass die erste Frontmaschine (54) auf einer Arbeitsposition (70) positioniert ist, eine zweite Frontmaschine (56) auf der ersten Parkposition (58, 80, 90) positioniert ist sowie die zweite Parkposition (60) nicht besetzt ist, wobei die erste Frontmaschine (54) zwischen der Arbeitsposition (70) und der zweiten Parkposition (60) verfahrbar ist, wenn sich die zweite Frontmaschine (56) auf der ersten Parkposition (58) befindet, und die zweite Frontmaschine (56) zwischen der ersten Parkposition (58) und der Arbeitsposition (70) verfahrbar ist, wenn sich die erste Frontmaschine (54) auf der zweiten Parkposition (60) befindet.

## Beschreibung

Die vorliegende Erfindung betrifft eine Anlage zur Herstellung von Komponenten eines Fahrzeugluftreifens, insbesondere eine Karkassstation, die einen stationären Karkassservicer und zumindest eine Frontmaschine zur Herstellung einer Reifenkarkasse eines Fahrzeugluftreifens aufweist.

Bei der Herstellung von Fahrzeugluftreifen werden in einer Karkassstation unterschiedliche Reifenaufbauteile auf einer Karkasstrommel aufgewickelt und weiterverarbeitet. Eine Art von Karkasstrommeln umfasst beispielsweise radial expandierbare Segmente, die schlauchförmig von einer Gummimanschette überdeckt sein können.

In diesem Zusammenhang beschreibt EP 2 789 458 A1 eine Anlage und ein Verfahren zur Herstellung einer Karkasse für einen Fahrzeugluftreifen, welche mit einem Gürtelverband und einem Laufstreifen sowie weiteren gegebenenfalls optionalen Bauteilen zum fertigen Rohreifen komplettiert wird, wobei die Anlage mehrere Arbeitsstationen, insbesondere eine Karkassstation, eine Gürtel-Laufstreifenstation und eine Bombierstation aufweist.

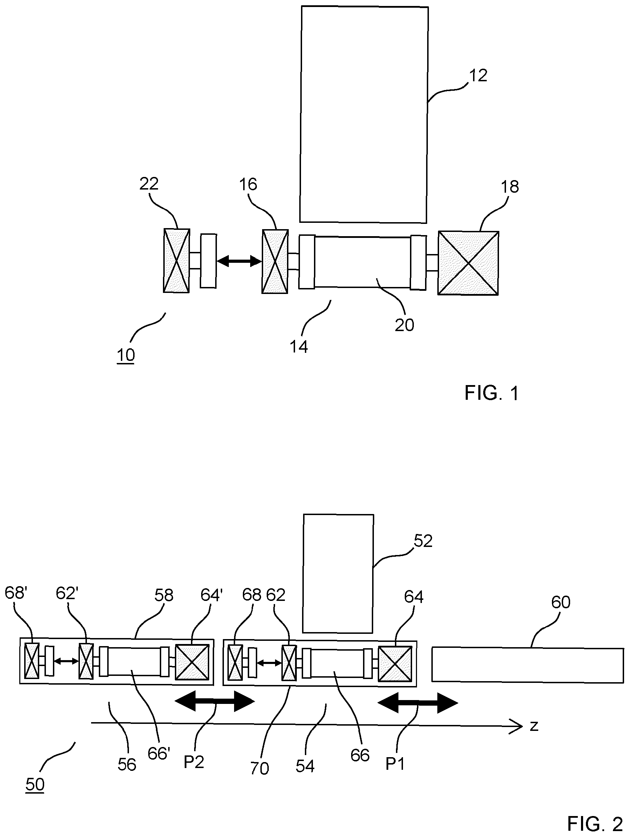

Eine Karkassstation 10 dieser Art ist in der Fig. 1 dargestellt. Die Karkassstation 10 beinhaltet einen Karkassservicer 12 und eine Frontmaschine 14. Die Frontmaschine 14 weist einen linken Maschinenkasten 16, einen rechten Maschinenkasten 18 und eine Karkass-Bautrommel 20 auf. Nachdem in der Karkassstation 10 eine Reifenkarkasse hergestellt ist, ist diese Reifenkarkasse entweder unter Verwendung einer Transfereinrichtung verfahrbar oder alternativ manuell übertragbar zur Übergabe an eine in der Fig. 1 nicht dargestellte Bombierstation. Das Bezugszeichen 22 bezeichnet dabei den linken Maschinenkasten in geöffneter Position.

Die Frontmaschine 14 ist für einen bestimmten Reifentyp mit einer vorgegebenen Größe, einer individuellen Trommel und zusätzlicher dimensionsabhängiger weiterer Ausstattung eingerichtet. Wenn die Karkassstation 10 einen anderen Reifentyp produzieren soll, so muss die Frontmaschine 14 umgerüstet werden. Beispielsweise müssen hierfür die Karkass-Bautrommel 20 und/oder für den neuen Reifentyp maßrelevante Teile gewechselt werden. Während dieser Umrüstzeit kann die Karkassstation 10 nicht produzieren. Dies führt zu einem Maschinenstillstand aufgrund von Werkzeugwechseln.

Es ist eine Aufgabe der vorliegenden Erfindung, eine Anlage zur Herstellung von Komponenten eines Fahrzeugluftreifens bereitzustellen, die eine hohe Produktivität aufweist.

Diese Aufgabe wird durch eine Anlage mit den Merkmalen des Anspruchs 1 gelöst. Bevorzugte Ausgestaltungen der Erfindung sind Gegenstand der abhängigen Ansprüche.

Gemäß einem ersten Aspekt der Erfindung weist eine Anlage zur Herstellung von Komponenten eines Fahrzeugluftreifens eine Arbeitsstation mit einer ersten Frontmaschine auf. Die Anlage ist dergestalt konfigurierbar, dass die erste Frontmaschine auf einer Arbeitsposition positioniert ist. Bei der erfindungsgemäßen Lösung beinhaltet die Anlage zudem eine erste Parkposition und eine zweite Parkposition. Die Anlage ist dergestalt konfigurierbar, dass eine zweite Frontmaschine auf der ersten Parkposition positioniert ist sowie die zweite Parkposition nicht besetzt ist, wobei die erste Frontmaschine zwischen der Arbeitsposition und der zweiten Parkposition verfahrbar ist und die zweite Frontmaschine zwischen der ersten Parkposition und der Arbeitsposition verfahrbar ist.

Gemäß einem Aspekt der Erfindung ist die zweite Frontmaschine von der ersten Parkposition auf die Arbeitsposition verfahrbar, wenn sich die erste Frontmaschine auf der zweiten Parkposition befindet, und die erste Frontmaschine ist von der zweiten Parkposition auf die Arbeitsposition verfahrbar, wenn sich die zweite Frontmaschine auf der ersten Parkposition befindet.

Gemäß einem Aspekt der Erfindung sind die erste Parkposition und die zweite Parkposition jeweils zu der Arbeitsposition benachbart.

Gemäß einem Aspekt der Erfindung sind die Arbeitsposition und die erste und die zweite Parkposition entlang einer ersten Transferachse angeordnet, und die erste Frontmaschine und die zweite Frontmaschine sind entlang der ersten Transferachse verfahrbar.

Gemäß einem Aspekt der Erfindung weist die Anlage eine dritte Parkposition auf und die Anlage ist dergestalt konfigurierbar, dass die dritte Parkposition nicht besetzt ist, wobei die erste Frontmaschine von der Arbeitsposition über die dritte Parkposition auf die zweite Parkposition verfahrbar ist, wenn die zweite Frontmaschine auf der ersten Parkposition geparkt ist, und wobei die zweite Frontmaschine von der ersten Parkposition über die die dritte Parkposition auf die Arbeitsposition verfahrbar ist, wenn die erste Frontmaschine von der Arbeitsposition auf die zweite Parkposition verfahren ist.

Gemäß einem Aspekt der Erfindung sind die Arbeitsposition und die dritte Parkposition entlang einer ersten Transferachse angeordnet, und die erste Parkposition und die zweite Parkposition sind jeweils zu der dritten Parkposition benachbart.

Gemäß einem Aspekt der Erfindung sind die erste, zweite und dritte Parkposition entlang einer zweiten Transferachse angeordnet, die unter einem Winkel ungleich Null zu der ersten Transferachse, insbesondere senkrecht zu der ersten Transferachse, angeordnet ist.

Gemäß einem Aspekt der Erfindung sind die Arbeitsposition und die erste Parkposition entlang einer ersten Transferachse angeordnet, und die zweite Parkposition ist entlang einer zweiten Transferachse angeordnet, die unter einem Winkel ungleich Null zu der ersten Transferachse angeordnet ist, wobei die erste Frontmaschine von der Arbeitsposition zu der zweiten Parkposition verfahrbar ist, wenn sich die zweite Frontmaschine auf der ersten Parkposition befindet, und wobei die zweite Frontmaschine von der ersten Parkposition zu der Arbeitsposition verfahrbar ist, wenn sich die erste Frontmaschine auf der zweiten Parkposition befindet.

Gemäß einem Aspekt der Erfindung ist die zweite Transferachse senkrecht zu der ersten Transferachse angeordnet.

Gemäß einem Aspekt der Erfindung ist die Anlage eine Karkassstation, die für eine Herstellung einer Karkasse des Fahrzeugluftreifens verwendbar ist.

Gemäß einem Aspekt der Erfindung weist die Karkassstation einen stationären Karkassservicer auf.

Gemäß einem Aspekt der Erfindung weist jede Frontmaschine jeweils eine Karkassmaschine mit einer Karkass-Bautrommel auf.

Gemäß einem Aspekt der Erfindung weist die Anlage ein horizontales Transfersystem, ein vertikales Transfersystem oder eine Kombination aus einem horizontalen und vertikalen Transfersystem auf, mit dem die beiden Frontmaschinen verfahrbar sind.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt eine Karkassstation gemäß dem Stand der Technik;
- Fig. 2, 3: zeigen schematisch ein erstes Ausführungsbeispiel einer erfindungsgemäßen Anlage zur Herstellung von Komponenten eines Fahrzeugluftreifens;
- Fig. 4, 5: zeigen schematisch ein zweites Ausführungsbeispiel einer erfindungsgemäßen Anlage zur Herstellung von Komponenten eines Fahrzeugluftreifens; und
- Fig. 6, 7: zeigen schematisch ein drittes Ausführungsbeispiel einer erfindungsgemäßen Anlage zur Herstellung von Komponenten eines Fahrzeugluftreifens.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

Fig. 2 zeigt eine Anlage für eine Herstellung von Komponenten eines Fahrzeugluftreifens, die eine Arbeitsstation mit einer Frontmaschine 54 aufweist. Die Arbeitsstation ist insbesondere eine Karkassstation 50, die einen stationären Karkassservicer 52 und die Frontmaschine 54 zur Herstellung einer Reifenkarkasse des Fahrzeugluftreifens aufweist. Die Karkassstation 50 beinhaltet weiterhin eine zweite Frontmaschine 56, die auf einer ersten Parkposition 58 positioniert ist, sowie eine zweite Parkposition 60, die nicht besetzt ist.

Die erste Frontmaschine 54 weist in diesem Ausführungsbeispiel einen linken Maschinenkasten 62, einen rechten Maschinenkasten 64 und eine Karkass-Bautrommel 66 auf, mit der insbesondere erste Komponenten der Karkasse herstellbar sind. Mittels einer Transfereinrichtung oder mittels eines manuellen Transfers ist die Karkasse nach ihrer Herstellung in der ersten Frontmaschine 54 zu einer in der Fig. 2 nicht dargestellten nächsten Station, der Bombierstation, verfahrbar. Das Bezugszeichen 68 bezeichnet dabei den linken Maschinenkasten in geöffneter Position.

Die Karkassstation 50 mit dem Karkassservicer 52 und den Frontmaschinen 54 und 56 können in an sich bekannter Weise ausgeführt sein. Die zweite Frontmaschine 56 ist vorzugsweise identisch oder baugleich zu der ersten Frontmaschine 54 aufgebaut.

Die zweite Frontmaschine 56 weist diesem Ausführungsbeispiel ebenfalls einen linken Maschinenkasten 62`, einen rechten Maschinenkasten 64` und eine Karkass-Bautrommel 66` auf. Das Bezugszeichen 68` bezeichnet wiederum den linken Maschinenkasten in geöffneter Position.

Wenn die Karkassstation 50 eine Karkasse für anderen, einen zweiten Reifentyp produzieren soll, so kann die erste Frontmaschine 54 mit der bestehenden Ausrüstung hierfür nicht mehr verwendet werden, da diese speziell für die Karkasse des ersten Reifentyps eingerichtet ist.

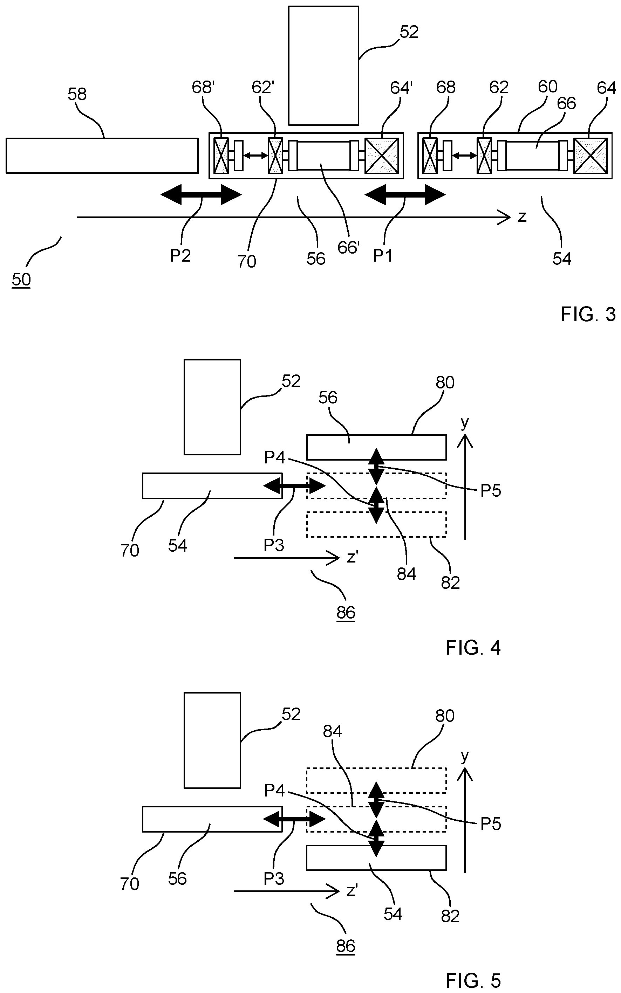

Die erste Frontmaschine 54, die auf einer Arbeitsposition 70 positioniert ist, wird deshalb von der Arbeitsposition 70 auf die zweite Parkposition 60 verfahren, wie durch einen Doppelpfeil P1 angedeutet. Anschließend wird die zweite Frontmaschine 56 von der ersten Parkposition 58 auf die Arbeitsposition 70 verfahren, angedeutet durch einen Doppelpfeil P2. Die zweite Frontmaschine 56 ist bereits für den zweiten Reifentyp vorbereitet, so dass die Karkassstation 50 produktionsbereit ist, nachdem die zweite Frontmaschine 56 auf die Arbeitsposition 70 verfahren ist. Diese Situation ist in der Fig. 3 dargestellt. Die Zeit, in der die Karkassstation 50 nicht produktionsbereit ist, kann deshalb sehr kurz gehalten werden.

Die erste Frontmaschine 54, die sich jetzt auf der zweiten Parkposition 60 befindet, kann in der Zeit, in der die zweite Frontmaschine 56 Karkassen für den zweiten Reifentyp produziert, bereits für eine Karkasse eines weiteren, eines dritten Reifentyps umgerüstet werden, beispielsweise indem die Karkass-Bautrommel 66 und/oder für den dritten Reifentyp maßrelevante Teile gewechselt werden.

Wie durch die Doppelpfeile P1 und P2 angedeutet, kann die zweite Frontmaschine 56 wieder auf die erste Parkposition 58 verfahren werden, wenn die Produktion des zweiten Reifentyps in der zweiten Frontmaschine 56 beendet ist, und die erste Frontmaschine 54 kann anschließend wieder auf die Arbeitsposition 70 verfahren werden, so dass nachfolgend Karkassen des dritten Reifentyps von der Karkassstation 50 produziert werden können. Es kann daher jeweils eine der beiden Frontmaschinen 54 und 56 umgerüstet werden, während des Betriebs der Karkassstation 50, die daher kontinuierlich in Betrieb bleiben kann.

Die zweite Frontmaschine 56 kann beliebig zwischen der ersten Parkposition 58 und der Arbeitsposition 70 verfahren werden, wenn sich die erste Frontmaschine 54 auf der zweiten Parkposition 60 befindet, und die erste Frontmaschine 54 kann beliebig zwischen der Arbeitsposition 70 und der zweiten Parkposition 60 verfahren werden, wenn sich die zweite Frontmaschine 56 auf der ersten Parkposition 58 befindet, entlang einer Achse z, einer Transferachse bzw. eines Transferpfades, wie in den Fig. 2 und 3 durch die Doppelpfeile P1 und P2 angedeutet.

Die erste Parkposition 58 und die zweite Parkposition 60 sind in diesem Ausführungsbeispiel jeweils zu der Arbeitsposition 70 benachbart. Die Arbeitsposition 70 befindet Sie sich hierbei direkt vor der Karkassmaschine 64, im Gegensatz zu den Parkpositionen 58 und 60, die von der Karkassmaschine 64 weiter entfernt sind.

Ein zweites Ausführungsbeispiel der Anlage für eine Herstellung von Komponenten eines Fahrzeugluftreifens ist in den Fig. 4 und 5 schematisch dargestellt. Die Anlage beinhaltet insbesondere eine Karkassstation 86, die den stationären Karkassservicer 52 und die erste Frontmaschine 54 aufweist. Die erste Frontmaschine 54 ist auf der Arbeitsposition 70 positioniert und ist hier beispielsweise zur Herstellung einer Karkasse eines vierten Reifentyps eines Fahrzeugluftreifens ausgerüstet. Die Karkassstation 86 beinhaltet weiterhin die zweite Frontmaschine 56, die auf einer ersten Parkposition 80 positioniert ist, sowie eine zweite Parkposition 82 und eine dritte Parkposition 84, die beide nicht besetzt sind.

Die dritte Parkposition 84 ist hierbei in einer Reihe zu der Arbeitsposition 70 angeordnet, entlang einer Achse z', und die erste Parkposition 80 ist parallel zu der dritten Parkposition 84 angeordnet, in positiver Richtung einer Achse y. Die zweite Parkposition 82 ist ebenfalls parallel zu der dritten Parkposition 84 angeordnet, aber in negativer Richtung der Achse y, so dass die erste Parkposition 80 und die zweite Parkposition 82 jeweils zu der dritten Parkposition 84 direkt benachbart sind. Die dritte Parkposition 84 ist hierbei zu der Arbeitsposition 70 direkt benachbart. Die Achse y und die Achse z' sind vorzugsweise zwei rechtwinklige Koordinaten, und insbesondere Transferachsen, entlang denen die erste Frontmaschine 52 und die zweite Frontmaschine 54 verfahren werden können.

Die erste Frontmaschine 54 kann hierbei von der Arbeitsposition 70 zu der dritten Parkposition 84 verfahren werden und anschließend entweder zu der ersten Parkposition 80 oder zu der zweiten Parkposition 82 verfahren werden, je nachdem wo die zweite Frontmaschine 56 positioniert ist: auf der ersten Parkposition 80 oder auf der zweiten Parkposition 82.

Wenn die Karkassstation 86 eine Karkasse für einen fünften Reifentyp mit einer anderen Größe produzieren soll, so kann die Frontmaschine 54 hierfür mit der bestehenden Ausrüstung nicht mehr verwendet werden, da diese speziell für die Karkasse des vierten Reifentyps eingerichtet ist.

Die erste Frontmaschine 54, die auf der Arbeitsposition 70 positioniert ist, wird deshalb von der Arbeitsposition 70 auf die dritte Parkposition 84 verfahren, wie durch einen Doppelpfeil P3 in der Fig. 4 angedeutet, und anschließend auf die zweite Parkposition 82, durch einen Doppelpfeil P4 angedeutet. Darauffolgend wird die zweite Frontmaschine 56 von der ersten Parkposition 80 auf die dritte Parkposition 84 verfahren, durch einen Doppelpfeil P5 angedeutet, und anschließend auf die Arbeitsposition 70 verfahren, angedeutet durch den Doppelpfeil P3 und in der Fig. 5 dargestellt.

Die zweite Frontmaschine 56 ist bereits für den fünften Reifentyp vorbereitet, so dass die Karkassstation 86 produktionsbereit ist, nachdem die zweite Frontmaschine 56 auf die Arbeitsposition 70 verfahren ist, Fig. 5. Die Zeit, in der die Karkassstation 86 nicht produktionsbereit ist, kann deshalb in diesem Ausführungsbeispiel ebenfalls sehr kurz gehalten werden.

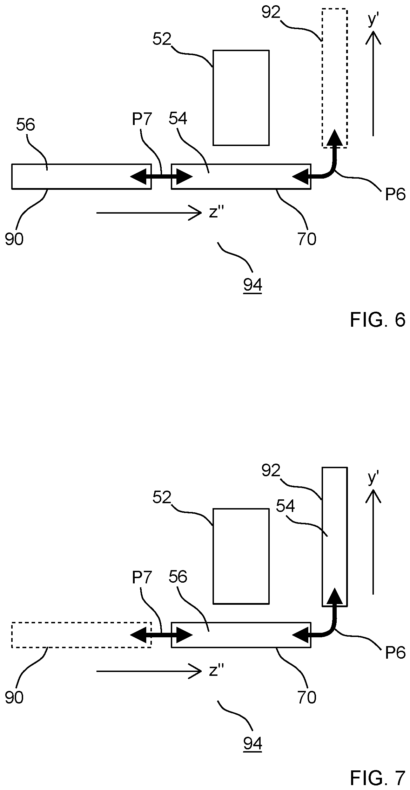

Ein drittes Ausführungsbeispiel der Anlage für eine Herstellung von Komponenten eines Fahrzeugluftreifens ist in den Fig. 6 und 7 schematisch dargestellt. Die Anlage beinhaltet insbesondere eine Karkassstation 94, die den stationären Karkassservicer 52 und die erste Frontmaschine 54 aufweist. Die erste Frontmaschine 54 ist auf der Arbeitsposition 70 positioniert und ist hier beispielsweise zur Herstellung einer Karkasse eines sechsten Reifentyps eines Fahrzeugluftreifens ausgerüstet. Die Karkassstation 94 beinhaltet weiterhin die zweite Frontmaschine 56, die auf einer ersten Parkposition 90 positioniert ist, sowie eine zweite Parkposition 92, die nicht besetzt ist.

Die erste Parkposition 90 ist hierbei in einer Reihe zu der Arbeitsposition 70 angeordnet, entlang einer Achse z", und die zweite Parkposition 92 ist unter einem Winkel zu der ersten Parkposition 90 angeordnet, in Richtung einer Achse y'. Die erste Parkposition 90 als auch die zweite Parkposition 92 sind hierbei jeweils zu der Arbeitsposition 70 benachbart. Die Achse y' und die Achse z" sind in diesem Ausführungsbeispiel vorzugsweise zwei rechtwinklige Koordinaten, und insbesondere Transferachsen, entlang denen die erste Frontmaschine 54 und die zweite Frontmaschine 56 verfahren werden können.

Die erste Frontmaschine 54 kann hierdurch von der Arbeitsposition 70 zu der zweiten Parkposition 92 verfahren werden, wie in der Fig. 6 durch einen Doppelpfeil P6 angedeutet, und anschließend kann die zweite Frontmaschine 56 von der ersten Parkposition 90 zu der Arbeitsposition 70 verfahren werden, wie in der Fig. 7 durch einen Doppelpfeil P7 angedeutet.

Die zweite Frontmaschine 56 ist bereits auf einen siebten Reifentyp mit einer anderen Größe vorbereitet, so dass die Karkassstation 94 produktionsbereit ist, nachdem die zweite Frontmaschine 56 auf die Arbeitsposition 70 verfahren ist. Die Zeit, in der die Karkassstation 94 nicht produktionsbereit ist, kann deshalb in diesem Ausführungsbeispiel ebenfalls sehr kurz gehalten werden.

Die beiden Frontmaschinen 54 und 56 sind gemäß der Erfindung nicht stationär, sondern beweglich angeordnet, und können beispielsweise unter Verwendung eines horizontalen oder vertikalen Transfersystems der Anlage, oder unter Verwendung einer Kombination aus einem horizontalen oder vertikalen Transfersystem, zwischen der Arbeitsposition und den Parkpositionen verfahren werden. Der Begriff "verfahrbar" ist daher nicht auf horizontale Bewegungen beschränkt, sondern kann auch vertikale und andere Bewegungen mit einbeziehen.

### Bezugszeichenliste

- 10: Karkassstation
- 12: Karkassservicer
- 14: Frontmaschine
- 16: Linker Maschinenkasten (in geschlossener Position)
- 18: Rechter Maschinenkasten
- 20: Karkass-Bautrommel
- 22: Linker Maschinekasten (in geöffneter Position)
- 40: Anlage
- 50: Karkassstation
- 52: Karkassservicer
- 54: Frontmaschine
- 56: Frontmaschine
- 58: Parkbereich
- 60: Parkbereich
- 62, 62`: Linker Maschinenkasten (in geschlossener Position)
- 64, 64`: Rechter Maschinenkasten
- 66, 66': Karkass-Bautrommeln
- 68, 68': Linker Maschinenkasten (in geöffneter Position)
- 70: Arbeitsposition
- 80: Parkbereich
- 82: Parkbereich
- 84: Parkbereich
- 86: Karkassstation
- 90: Parkbereich
- 92: Parkbereich
- 94: Karkassstation
- P1-P7: Doppelpfeile
- z, z', z": Achsen
- y, y`: Achsen

## Patentansprüche

1. Anlage (50, 86, 94) zur Herstellung von Komponenten eines Fahrzeugluftreifens, die eine Arbeitsstation mit einer ersten Frontmaschine (54), eine erste Parkposition (58, 80, 90) sowie eine zweite Parkposition (60, 82, 92) aufweist, wobei die Anlage (50, 86, 94) dergestalt konfigurierbar ist, dass die erste Frontmaschine (54) auf einer Arbeitsposition (70) positioniert ist, eine zweite Frontmaschine (56) auf der ersten Parkposition (58, 80, 90) positioniert ist sowie die zweite Parkposition (60, 82, 92) nicht besetzt ist, wobei die erste Frontmaschine (54) zwischen der Arbeitsposition (70) und der zweiten Parkposition (60, 82, 92) verfahrbar ist und die zweite Frontmaschine (56) zwischen der ersten Parkposition (58, 80, 90) und der Arbeitsposition (70) verfahrbar ist.

2. Anlage (50, 86, 94) gemäß Anspruch 1, wobei die zweite Frontmaschine (56) von der ersten Parkposition (58, 80, 90) auf die Arbeitsposition (70) verfahrbar ist, wenn sich die erste Frontmaschine (54) auf der zweiten Parkposition (60, 82, 92) befindet, und die erste Frontmaschine (54) von der zweiten Parkposition (60, 82, 92) auf die Arbeitsposition (70) verfahrbar ist, wenn sich die zweite Frontmaschine (56) auf der ersten Parkposition (58, 80, 90) befindet.

3. Anlage (50, 94) gemäß Anspruch 1 oder 2, wobei die erste Parkposition (58, 90) und die zweite Parkposition (60, 92) jeweils zu der Arbeitsposition (70) benachbart sind.

4. Anlage (50) gemäß einem der vorherigen Ansprüche, wobei die Arbeitsposition (70) und die erste (58) und die zweite Parkposition (60) entlang einer ersten Transferachse (z) angeordnet sind, wobei die erste Frontmaschine (54) und die zweite Frontmaschine (56) entlang der ersten Transferachse (z) verfahrbar sind.

5. Anlage (86) gemäß Anspruch 1 oder 2, wobei die Anlage (86) eine dritte Parkposition (84) aufweist und die Anlage (86) dergestalt konfigurierbar ist, dass die dritte Parkposition (84) nicht besetzt ist, wobei die erste Frontmaschine (54) von der Arbeitsposition (70) über die dritte Parkposition (84) auf die zweite Parkposition (82) verfahrbar ist, wenn die zweite Frontmaschine (56) auf der ersten Parkposition (80) geparkt ist, und wobei die zweite Frontmaschine (56) von der ersten Parkposition (80) über die die dritte Parkposition (84) auf die Arbeitsposition (70) verfahrbar ist, wenn die erste Frontmaschine (54) von der Arbeitsposition (70) auf die zweite Parkposition (82) verfahren ist.

6. Anlage (86) gemäß Anspruch 5, wobei die erste Parkposition (80) und die zweite Parkposition (82) jeweils zu der dritten Parkposition (84) benachbart sind.

7. Anlage (86) gemäß Anspruch 5 oder 6, wobei die Arbeitsposition (70) und die dritte Parkposition (84) entlang einer ersten Transferachse (z`) angeordnet sind.

8. Anlage (86) gemäß Anspruch 7, wobei die erste, zweite und dritte Parkposition (80, 82, 84) entlang einer zweiten Transferachse (y) angeordnet sind, wobei die zweite Transferachse (y) unter einem Winkel ungleich Null zu der ersten Transferachse (z`) angeordnet ist.

9. Anlage (94) gemäß einem der Ansprüche 1 bis 3, wobei die Arbeitsposition (70) und die erste Parkposition (90) entlang einer ersten Transferachse (z") angeordnet sind, und die zweite Parkposition (92) entlang einer zweiten Transferachse (y`) angeordnet ist, die unter einem Winkel ungleich Null zu der ersten Transferachse (z") angeordnet ist, wobei die erste Frontmaschine (54) von der Arbeitsposition (70) zu der zweiten Parkposition (92) verfahrbar ist, wenn sich die zweite Frontmaschine (56) auf der ersten Parkposition (90) befindet, und wobei die zweite Frontmaschine (56) von der ersten Parkposition (90) zu der Arbeitsposition (70) verfahrbar ist, wenn sich die erste Frontmaschine (54) auf der zweiten Parkposition (92) befindet.

10. Anlage (94) gemäß Anspruch 9, wobei die zweite Transferachse (y`) senkrecht zu der ersten Transferachse (z") angeordnet ist.

11. Anlage (50, 86, 94) gemäß einem der vorherigen Ansprüche, wobei die Anlage (50, 86, 94) eine Karkassstation (50, 86, 94) ist, die für eine Herstellung einer des Fahrzeugluftreifens verwendbar ist.

12. Anlage (50, 86, 94) gemäß Anspruch 11, wobei die Karkassstation (50, 86, 94) einen stationären Karkassservicer (52) aufweist.

13. Anlage (50, 86, 94) gemäß Anspruch 11 oder 12, wobei jede Frontmaschine (54, 56) jeweils eine Karkassmaschine (64, 64`) mit einer Karkass-Bautrommel (66, 66`) aufweisen.

14. Anlage (50, 86, 94) gemäß einem der vorherigen Ansprüche, wobei die Anlage ein horizontales Transfersystem, ein vertikales Transfersystem oder eine Kombination aus einem horizontalen und vertikalen Transfersystem aufweist, mit dem die beiden Frontmaschinen (54, 56) verfahrbar sind.
